# EUROPEAN PATENT APPLICATION

(11) **EP 4 721 927 A1**
(43) Date of publication of application: **08.04.2026**
(21) Application number: 24204184.6
(22) Date of filing: 02.10.2024
(51) Int. Cl.: B25F 5/02, B23Q 11/00

(54) **DUST REMOVAL DEVICE WITH IMPROVED LIGHTING**

(71) Applicant: Hilti Aktiengesellschaft, 9494 Schaan (LI)
(72) Inventor: Britz, Rory, 82319 Starnberg (DE); Dang, Lieu-Kim, 9473 Gams (CH)
(74) Representative: Hilti Aktiengesellschaft Corporate Intellectual Property

(57) **Abstract**

Dust removal device (40) configured to be connected to a power tool performing an operation by using a tool insert (14) on a workpiece, the dust removal device (40) including a device housing (41), an extraction head (42) configured to suck dust generated by the tool insert (14), a transfer part (43) connected to the extraction head (42) and movable along a longitudinal direction (44) with respect to the device housing (41), a dust container (45) configured to collect dust and being connected to the transfer part (43), and a light unit (46) configured to emit a light beam (47), wherein the dust removal device (40) further includes an optical guiding element (48) configured to guide the light beam (47) towards the tip of the tool insert (14).

## Description

The present invention relates to a dust removal device configured to be connected to a power tool according to the definition of claim 1.

### Background of the invention

In power tools, which perform an operation such as hammering, hammer drilling and/or drilling by a tool insert on a workpiece, dust is generated during operation. Therefore, known power tools are provided with a dust removal device for sucking dust generated during operation, the dust removal device including a device housing, an extraction head configured to suck dust generated by the tool insert, a transfer part connected to the extraction head and movable along a longitudinal direction with respect to the device housing, and a dust container configured to collect dust and being connected to the transfer part.

When, for example, a drilling operation is performed on a predetermined position of a workpiece, it is necessary to position the tip of the tool insert on the predetermined position. Further, in order to efficiently suck dust, the tip of the tool insert has to be covered by the extraction head. In such a construction, it is difficult for the user to visually check the position of the tip of the tool insert. Therefore, when the user performs an operation which requires positioning of the tip of the tool insert on the workpiece, a cumbersome operation is required, for example, for checking the position of the tip of the tool insert. Specifically, while holding the power tool with one hand, the user has to move the dust suction part toward the tool body of the power tool with the other hand so as to expose the tip to the outside in order to check the position of the tip of the tool insert. Further, in a large power tool which has to be held by user's both hands, the operation itself of exposing the tip to the outside is difficult to perform. Thus, the conventional power tool with the dust removal device is not easy to operate, and in this point, further improvement is desired.

US 8,997,887 B2 discloses a known dust removal device configured to be connected to a power tool performing an operation by using a tool insert. The dust removal device includes a device housing, an extraction head configured to suck dust generated by the tool insert, a transfer part connected to the extraction head and movable along a longitudinal direction with respect to the device housing, and a dust container configured to collect dust and being connected to the transfer part.

To illuminate the working area of a tool insert, the dust removal device includes a light unit. The light unit mainly includes a light source in the form of an LED (light-emitting diode) and a light case that is made of translucent materials, such as transparent resin and glass, and houses the LED light. The light unit is provided at the extraction head and the beam direction of the light beam is oriented such that the light beam irradiates the tip of the tool insert.

To power the light unit, the dust removal device includes an electrical cable that connects the light unit to a power source of the dust removal device or to an electrical interface. The electrical cable is arranged in the transfer part that is movable along the longitudinal direction. By moving the electrical cable on a regular base during operation of the dust removal device, a risk that the electrical cable may be damaged is increased.

### Summary of the invention

Therefore, what is desired is a dust removal device that improves the usability for the user during operation and reduces the risk of damaging the light unit.

These objectives are achieved by realizing the features of the independent claims. Features which further develop the invention in an advantageous manner are described in the dependent claims.

According to an aspect of the present invention, the dust removal device is characterized in that the dust removal device further includes an optical guiding element configured to guide the light beam towards the tip of the tool insert.

The dust removal device according to the present invention includes a device housing, an extraction head configured to suck dust generated by the tool insert, a transfer part connected to the extraction head and movable along a longitudinal direction with respect to the device housing, a dust container configured to collect dust and being connected to the transfer part, and a light unit configured to emit a light beam.

Using an optical guiding element to guide the light beam towards the tip of the tool insert allows that the light unit can be arranged in a non-movable part of the dust removal device and that the risk of damaging the light unit or the electrical connection of the light unit can be reduced. The light unit can be arranged at the device housing of the dust removal device and can be connected by means of an electrical connection to an electrical interface or to a power source of the dust removal device. The optical guiding element is configured to guide the light beam towards the tip of the tool insert and the guiding functionality can be realized via reflection by a mirror, refraction by a lens or diffraction by a grating. Besides the guiding functionality a forming functionality can be integrated into the optical guiding element in order to form the light beam.

Preferably, the light unit is arranged on the device housing and the optical guiding element is connected to the extraction head. The device housing is a non-movable part of the dust removal device and by arranging the light unit on the device housing, the risk of damaging the light unit or the electrical connection of the light unit is reduced. The extraction head is arranged in the vicinity of the tip of the tool insert and by connecting the optical guiding element to the extraction head the optical guiding element can guide the light beam towards the tip of the tool insert.

Preferably, the light unit is at least partially encased by a housing element and the optical guiding element is mounted to an optic holder. Encasing the light unit by a housing element allows to protect the light unit against dust, and mounting the optical guiding element to an optic holder allows a stable mounting of the optical guiding element at the extraction head.

In a first preferred version, the housing element is integrated into the device housing and/or the optic holder is fixedly connected to the extraction head. By integrating the housing element into the device housing and/or by fixedly connecting the optic holder to the extraction head, the light unit and/or the optical guiding element can be connected in a stable manner to the dust removal device.

In a second preferred version, the housing element is connected in a releasable manner to the device housing and/or the optic holder is connected in a releasable manner to the extraction head. By connecting the housing element in a releasable manner to the device housing and/or the optic holder in a releasable manner to the extraction head, the light unit and/or the optical guiding element can be replaced easily.

Preferably, the light beam propagates in a beam direction that is parallel to an axis of rotation of the tool insert with a non-zero offset. A light beam that propagates parallel to the axis of rotation of the tool insert with a non-zero offset allows that the light beam is guided towards the tip of the tool insert for all distances of the light unit to the optical guiding element. If the light beam would propagate in a non-parallel manner, the distance of the light unit to the optical guiding element would change the position, at which the light beam hits the optical guiding element, and would change the area, that is illuminated by the light beam.

In a preferred embodiment, the light unit includes a first light unit configured to emit a first light beam and a second light unit configured to emit a second light beam, and the optical guiding element includes a first optical guiding element configured to guide the first light beam towards the tip of the tool insert and a second optical guiding element configured to guide the second light beam towards the tip of the tool insert.

A dust removal device that includes two light units (first light unit and second light unit) and two optical guiding elements (first optical guiding element and second optical guiding element) allows to improve the usability for the user during operation of the dust removal device. When the first light beam hits the first optical guiding element, the first light beam is guided towards the tip of the tool insert, and when the second light beam hits the second optical guiding element, the second light beam is guided towards the tip of the tool insert. Besides illuminating the working area of the tool insert, the first light beam and second light beam can be used to indicate the position of the axis of rotation of the tool insert.

Preferably, the first light unit is at least partially encased by a first housing element and the second light unit is at least partially encased by a second housing element, and/or the first optical guiding element is mounted to a first optic holder, and the second optical guiding element is mounted to a second optic holder. The first and second housing elements can be integrated into the device housing, or the first and second housing elements can be connected in a releasable manner to the device housing. The first and second optic holders can be fixedly connected to the extraction head, or the first and second optic holders can be connected in a releasable manner to the extraction head.

Preferably, the first light beam propagates in a first beam direction that is parallel to an axis of rotation of the tool insert with a first non-zero offset and the second light beam propagates in a second beam direction that is parallel to the axis of rotation of the tool insert with a second non-zero offset. When the first light beam hits the first optical guiding element, the first beam direction is changed such that the first light beam is guided towards the tip of the tool insert, and when the second light beam hits the second optical guiding element, the second beam direction is changed such that the second light beam is guided towards the tip of the tool insert.

A first light beam that propagates parallel to the axis of rotation of the tool insert with a first non-zero offset allows that the first light beam is guided towards the tip of the tool insert for all distances of the first light unit to the first optical guiding element, and a second light beam that propagates parallel to the axis of rotation of the tool insert with a second non-zero offset allows that the second light beam is guided towards the tip of the tool insert for all distances of the second light unit to the second optical guiding element.

Preferably, the first light beam and the second light beam cross each other after the first light beam has passed the first optical guiding element and the second light beam has passed the second optical guiding element. When the first light beam hits the first optical guiding element, the first light beam is guided towards the tip of the tool insert, and when the second light beam hits the second optical guiding element, the second light beam is guided towards the tip of the tool insert. A first and second light beam that cross each other can be used to transfer the center of the axis of rotation of the tool insert onto the workpiece and can increase the usability of the dust removal device.

Preferably, the first light beam and the second light beam create a contrasting pattern in a plane substantially perpendicular to the axis of rotation of the tool insert, the contrasting pattern indicating the center of the axis of rotation of the tool insert. A contrasting pattern created by the first and second light beam can increase the usability of the dust removal device. The contrasting pattern indicates the center of the axis of rotation of the tool insert on the workpiece.

In a preferred embodiment, the light source is selected from any one of a white LED, a colored LED, and a laser light source. For a dust removal device including only one light source, a white LED is preferred to illuminate the tip of the tool insert. For a dust removal device including a first light source and second light source, colored LED's can be used to increase the visibility of the light beams for the operator; green light has a better visibility than red light. In case that the light source includes a first light source emitting a first light beam and a second light source emitting a second light beam, the first and second light sources are selected from the same type of light source; the light sources will have the same wavelength or same range of wavelengths and the same power. The color of the light source can be adapted to the objective of the light unit, such as illuminating the tip of the tool insert and it's working area on the workpiece or transferring the center of the axis of rotation of the tool insert onto the workpiece.

In a preferred embodiment, the optical guiding element is selected from any one of a plane mirror, a convex mirror, a concave mirror, a prism, a group of prisms, a lens, a group of lenses, a light guide, or a grating. The optical guiding element can have guiding and/or forming properties and is selected such that the light beam is directed onto the tip of the tool insert and can illuminate the working area of the tool insert on the workpiece. In case that the optical guiding element includes a first optical guiding element configured to guide a first light beam emitted by a first light source towards the tip of the tool insert and a second optical guiding element configured to guide a second light beam emitted by a second light source towards the tip of the tool insert, the first and second optical guiding elements are selected from the same type of optical guiding element; the optical guiding elements will have the same optical guiding and/or forming properties and will be adapted to the same wavelength or same range of wavelengths.

In a preferred embodiment, the dust removal device further comprises a power cord connecting the light unit to a power source of the dust removal device, to an electrical interface that is configured to be connected to the power tool, or to a power source of the light unit. Since the light unit is arranged at a non-moving part of the dust removal device, the risk of damaging the light unit or the power cord can be reduced.

According to another aspect of the present invention, the power tool is configured to be connected to a dust removal device according to the present invention. To enable that the dust removal device can be powered by a battery pack of the power tool, the power tool and the dust removal device are connected via a mechanical interface and an electrical interface.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIGS. 1A, B: show a power tool formed as hammer drill that is connected to a dust removal device in a connected state (FIG. 1A) and in an unconnected state (FIG. 1B) of the dust removal device,
- FIGS. 2A, B: show a first version of a dust removal device according to the present invention, the dust removal device including a light unit and an optical guiding element for illuminating a working area,
- FIGS. 3A, B: show in detail the light unit (FIG. 3A) and the optical guiding element (FIG. 3B) of the dust removal device shown in FIG. 2,
- FIG. 4: shows an alternative optical guiding element for the dust removal device shown in FIG. 2, and
- FIGS. 5A, B: show a second version of a dust removal device according to the present invention, the dust removal device including a first and second light unit and a first and second optical guiding element for illuminating a working area.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

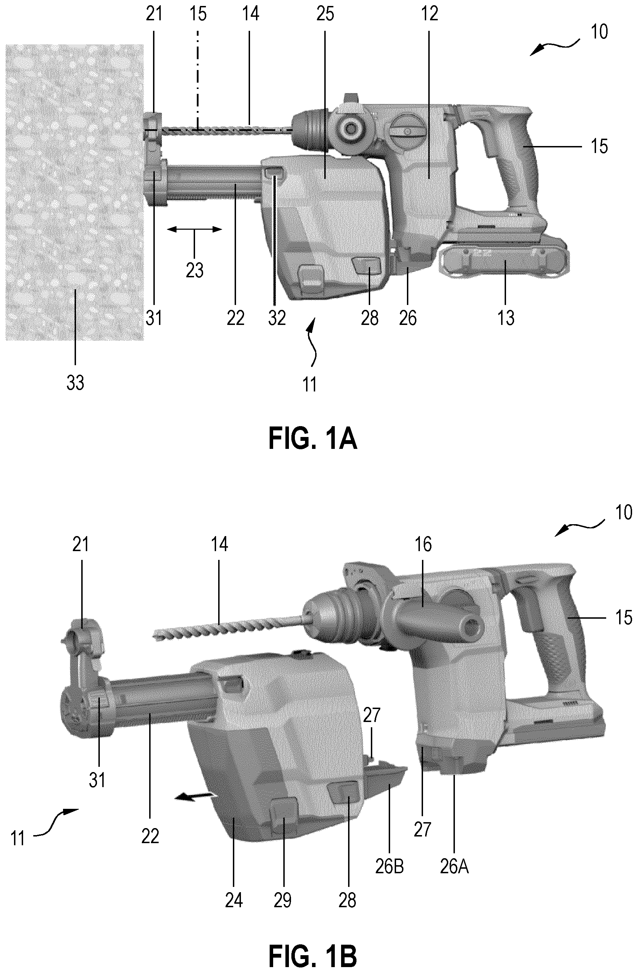

**FIGS. 1A****, B** show a power tool **10** and a dust removal device **11** configured to be connected to the power tool 10 in a connected state (FIG. 1A) and in an unconnected state (FIG. 1B) of the dust removal device 11. The power tool 10 is formed as handheld cordless hammer drill that is provided for hammering, hammer drilling and/or drilling operations.

The term "power tool" refers to mains-operated (corded) power tools, battery-operated (cordless) power tools, and any other type of power tools, such as gas- or petrol-driven power tools. The term "tool insert" refers to all types of tool inserts that are configured to be connected to a power tool.

The hammer drill 10 includes a motor housing **12** with an electric motor (not shown), a battery pack **13** for powering the power tool and a tool insert **14** formed as drill bit that is rotated about an axis of rotation **15.** For operating the hammer drill 10, the power tool must be held securely with both hands on the defined handles, a main handle **16** and a side handle **17.**

The dust removal device is used for dust extraction; dust from materials such as lead-based paints, certain types of wood and concrete/masonry/stone containing quartz, minerals or metal can be harmful to health. The dust removal device 11 includes an extraction head **21** configured to suck dust generated by a tool insert, such as the drill bit 14, a transfer part **22** connected to the extraction head 21 and being movable along a longitudinal direction **23,** a dust container **24** connected to the transfer part 22 and configured to collect the dust sucked by the extraction head 21, and a device housing **25.**

In the exemplary version, the dust removal device 11 further comprises a built-in extractor fan (not shown) driven by a fan motor (not shown). When the hammer drill 10 is switched on, the dust removal device 11 draws its electric power from the battery pack 13 of the hammer drill 10. To enable that the dust removal device 11 is powered by the battery pack 13, the power tool 10 and the dust removal device 11 are connected via a mechanical interface **26** and an electrical interface **27.** The mechanical interface includes female connectors **26A** in the housing of the power tool 10 and male connectors **26B** protruding from the device housing of the dust removal device 11.

Before fitting the dust removal device 11 to the power tool 10, a forward/release selector switch of the hammer drill 10 is set to a neutral position and a depth gauge is removed from the side handle 17. The dust removal device 11 is positioned in the grooves of the power tool 10 and pushed towards the power tool 10 from the front until it engages. To remove the dust removal device 11 from the power tool 10, a release button **28** is pressed and hold down so the dust removal device 11 can be pulled back.

The dust removal device 11 includes a filter (not shown), and both the filter and the dust container 24 have to be emptied regularly. To remove the dust container 24, a dust container release button **29** is pressed and hold down so the dust container 24 can be pulled down. The dust container can be emptied, and the filter can be cleared. The empty dust container can be pushed back into the dust removal device 11 until it engages.

For different applications, such as drilling and chiseling, different extraction heads 21 are required. Furthermore, extraction heads are consumables that must be exchanged on a regular base. To change the extraction head 21, the dust removal device 11 is removed from the power tool 10. An extraction head release button **31** is pressed and hold down so the extraction head 21 can be pulled up and out of its guide, and a new extraction head is pressed into the guide until it engages.

In order to allow the extraction head 21 pressed against the workpiece to retract with respect to the drill bit 14 as the operation proceeds (the drill bit digs into the workpiece), the transfer part 22 can include a telescopic tubular member that extends parallel to the drill bit 14. The telescopic tubular member can include an inner tube and an outer tube which are fitted such that they can slide in the longitudinal direction 23 with respect to each other. For setting the length of the transfer part 22, a stroke preselection button **32** is provided at the device housing. When the stroke preselection button 32 is pressed, a telescopic section of the transfer part will jump out.

FIG. 1A shows the hammer drill 10 used for a drilling operation on a workpiece **33.** For this purpose, prior to the drilling operation, at least the tip of the drill bit 14 has to be exposed through the front end of the extraction head 21. During drilling operation, the front end of the extraction head 21 is held in contact with the surface of the workpiece and sucks in dust.

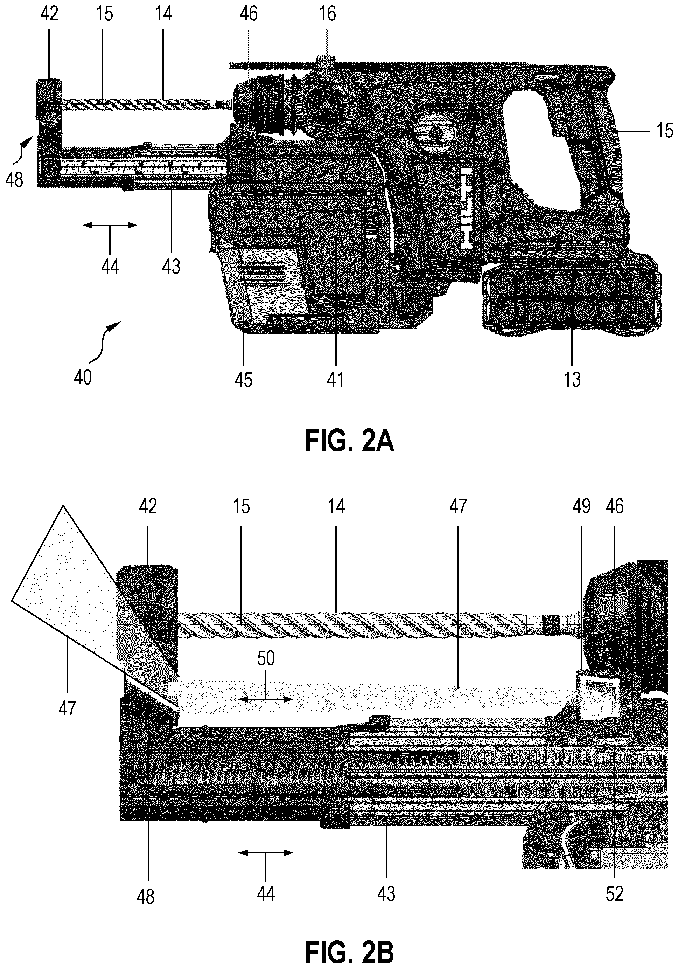

**FIGS. 2A****, B** show a first version of a dust removal device **40** according to the present invention. The dust removal device 40 is configured to be connected to a power tool, such as the hammer drill 10 shown in FIG. 1. The dust removal device 40 can substitute the dust removal device 11 shown in FIG. 1.

The dust removal device 40 comprises a device housing **41,** an extraction head **42** configured to suck dust generated by a tool insert, such as the drill bit 14, a transfer part **43** connected to the extraction head 42 and being movable along a longitudinal direction **44** with respect to the device housing 41, and a dust container **45** configured to collect the dust sucked by the extraction head 42 and being connected to the transfer part 43.

The dust removal device 40 further includes a light unit **46** configured to emit a light beam **47** and an optical guiding element **48** configured to guide the light beam 47 towards the tip of the tool insert 14. In the exemplary version, the light unit 46 is encased by a housing element **49** and includes a light source and a forming optic, which is configured to collimate or optically form the light beam 47. After forming at the forming optic, the light beam 47 propagates in a beam direction **50,** that is parallel to the axis of rotation 15 of the tool insert 14 with a non-zero offset Δ, towards the optical guiding element 48.

When the light beam 47 hits the optical guiding element 48, the deflected light beam 47 is guided towards the tip of the tool insert 14. The optical guiding element 48 is selected such that the light beam 47 can illuminate the working area of the tool insert 14 on the workpiece. The guiding functionality can be realized via reflection by a mirror, refraction by a lens or diffraction by a grating. Besides the guiding functionality a forming functionality can be integrated into the optical guiding element 48 in order to form the light beam 47.

In order to power the light unit 46, the dust removal device 40 includes a power cord 52 that connects the light unit 46 to a power source of the dust removal device 40, or to an electrical interface that is configured to be connected to the power tool. Alternatively, the dust removal device 40 may include a separate power source configured to power the light unit 46.

The concept of the dust removal device 40 according to the present invention can be used in combination with any type of power tool performing an operation by using a tool insert on a workpiece, wherein the tool insert generates dust during the operation.

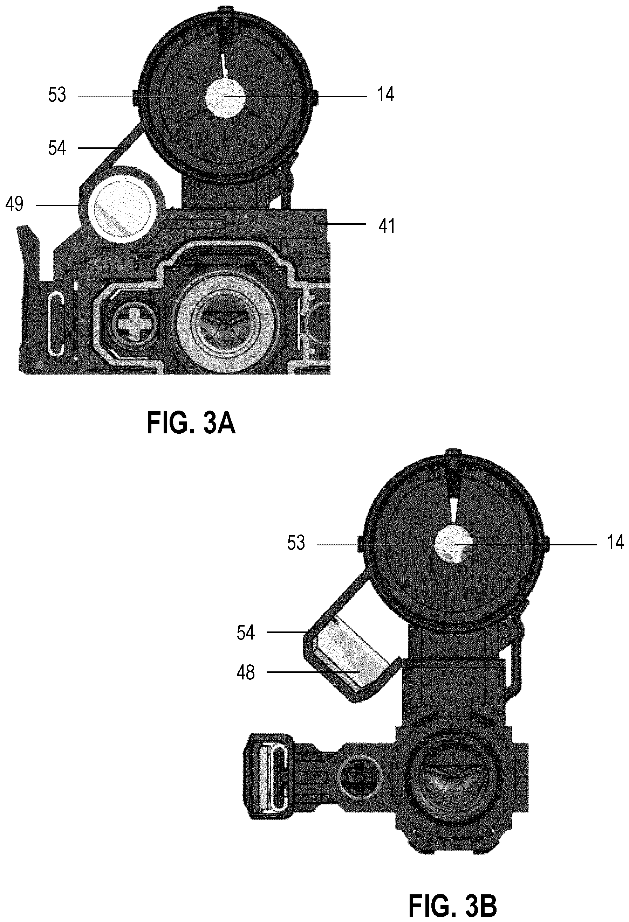

**FIGS. 3A****, B** show in detail the light unit 46 (FIG. 3A) and the optical guiding element 48 (FIG. 3B) of the dust removal device 40, the light unit 46 being arranged at the device housing 41 and the optical guiding element 48 being arranged at the extraction head 42.

In order to suck dust that is generated by the tool insert 14 during operation of a power tool, such as the hammer drill 10 shown in FIG. 1, a rubber cover **53** or any other flexible material is provided on a rear surface of the extraction head 42 and the tool insert 14 can extend through the rubber cover 53. The rubber cover 53 allows the tool insert 14 to move in its axial direction with respect to the extraction head 42 while preventing dust sucked into the extraction head 42 from escaping out of the extraction head 42 by utilizing elastic deformation of the rubber cover 53.

The light unit 46 is configured to emit the light beam 47, the light beam 47 propagating in the beam direction 50, that is parallel to the axis of rotation 15 of the tool insert 14. In the exemplary version shown in FIG. 3A, the light unit 46 is encased by the housing element 49 that is formed in a one-piece manner with the device housing 41 of the dust removal device 40. Alternatively, the housing element may be formed as a separate part and connected in a releasable manner to the device housing 41.

The light unit 46 can be selected from any of a white LED, a colored LED, and a laser light source. For the dust removal device 40 including only one light source, a white LED may be preferred to illuminate the tip of the tool insert 14.

The optical guiding element 48 is configured to guide the light beam 47 towards the tip of the tool insert 14. To allow to deflect the light beam 47 and guide the light beam 47 towards the tip of the tool insert 14, the optical guiding element 48 is formed as a mirror and mounted to an optic holder **54.** To increase the size of the illuminated working area at the tool insert 14 or to form the light beam 47, a forming functionality may be integrated into the optical guiding element 48. The optic holder 54 and the mirror 48 are formed as separate components and the mirror 48 can be connected in a releasable manner or a non-releasable manner to the optic holder 54; alternatively, the optical guiding element and optic holder may be formed in a one-piece manner.

In the exemplary version shown in FIG. 3B, the optical guiding element 48 is fixedly connected to the optic holder 54. Alternatively, the optical guiding element 48 may be adjustable with respect to the axis of rotation 15 of the tool insert 14 and/or the optical properties of the optical guiding element 48 may be adjustable.

The optical guiding element 48 may be selected from any one of a plane mirror, a convex mirror, a concave mirror, a prism, a group of prisms, a lens, a group of lenses, a light guide, or a grating. The optical guiding element 48 can have guiding and/or forming properties and is selected such that the light beam 47 is directed onto the tip of the tool insert 14 and can illuminate the working area of the tool insert 14 on the workpiece.

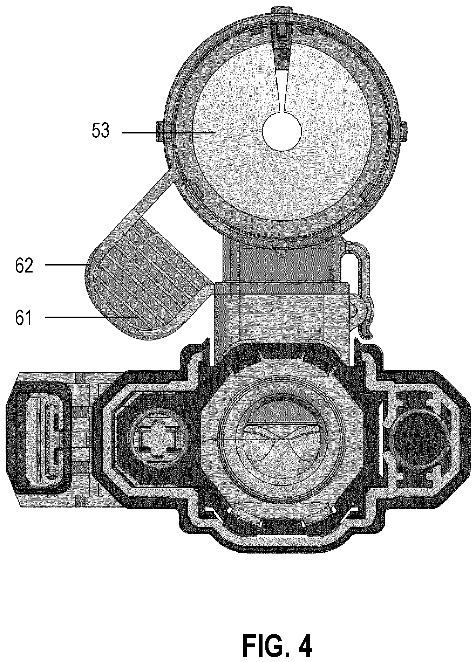

**FIG. 4** shows an alternative optical guiding element **61** for the dust removal device 40 shown in FIG. 2. The optical guiding element 61 is formed as a group of prisms and formed in a one-piece manner with an optic holder **62.**

The optical guiding element 61 is configured to guide the light beam 47 towards the tip of the tool insert 14 via refraction. Instead of the group of prisms 61 as shown in FIG. 4, a single prism can be used to deflect and guide the light beam 47 via refraction. Alternatively, the light beam 47 can be deflected and guided via reflection or diffraction.

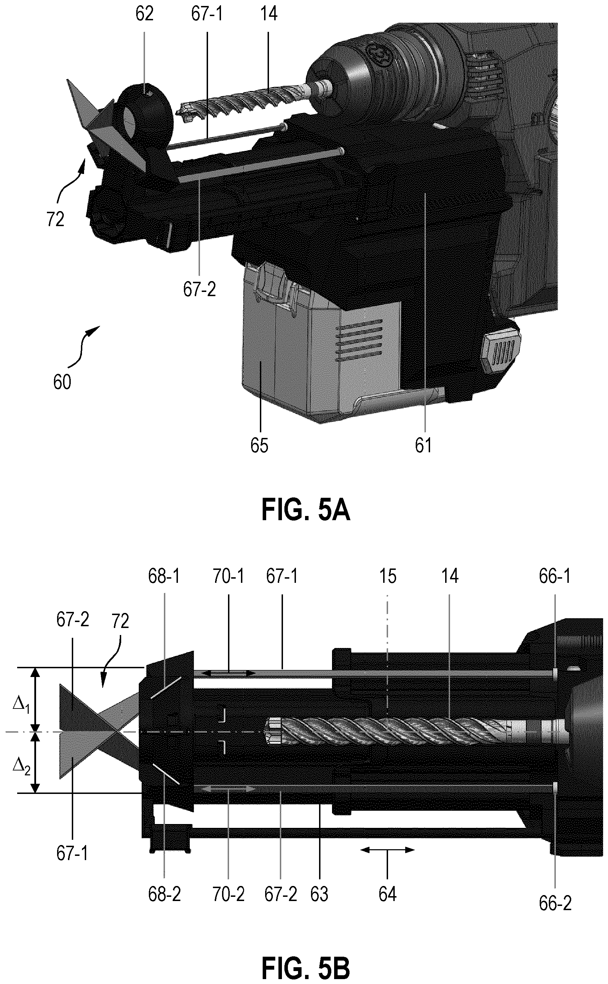

**FIGS. 5A****, B** show a second version of a dust removal device **70** according to the present invention. The dust removal device 70 is configured to be connected to a power tool, such as the hammer drill 10 shown in FIG. 1 and can substitute the dust removal device 11 shown in FIG. 1. FIG. 5A shows the dust removal device 70 in a perspective view and FIG. 5B shows a detail of the dust removal device 70 in a side view.

The dust removal device 70 comprises a device housing **71,** an extraction head **72** configured to suck dust generated by a tool insert, such as the drill bit 14, a transfer part **73** connected to the extraction head 72 and being movable along a longitudinal direction **74** with respect to the device housing 71, and a dust container **75** configured to collect the dust sucked by the extraction head 72 and being connected to the transfer part 73.

The dust removal device 70 further includes a first light unit **76-1** configured to emit a first light beam **77-1,** a first optical guiding element **78-1** configured to guide the first light beam 77-1 towards the tip of the tool insert 14, a second light unit **76-2** configured to emit a second light beam **77-2,** and a second optical guiding element **78-2** configured to guide the second light beam 77-2 towards the tip of the tool insert 14.

The first light beam 77-1 propagates in a first beam direction **80-1** that is parallel to the axis of rotation 15 of the tool insert 14 with a first non-zero offset Δ, towards the first optical guiding element 78-1, and the second light beam 77-2 propagates in a second beam direction 80-2 that is parallel to the axis of rotation 15 of the tool insert 14 with a second non-zero offset Δz towards the second optical guiding element 78-2.

When the first light beam 77-1 hits the first optical guiding element 78-1, the deflected first light beam 77-1 is guided towards the tip of the tool insert 14, and when the second light beam 77-2 hits the second optical guiding element 78-2, the deflected second light beam 77-2 is guided towards the tip of the tool insert 14. The first optical guiding element 78-1 and second optical guiding element 78-2 are selected such that the first light beam 77-1 and second light beam 77-2 can illuminate the working area of the tool insert 14 on the workpiece. The guiding functionality of the first and second optical guiding elements 78-1, 78-2 can be realized via reflection by a mirror, refraction by a lens or diffraction by a grating. Besides the guiding functionality a forming functionality can be integrated into the first and second optical guiding elements 78-1, 78-2 in order to form the first light beam 77-1 respectively the second light beam 77-2.

In the exemplary version, the deflected first light beam 77-1 and the deflected second light beam 77-2 cross each other in a crossing area 82 after passing the first optical guiding element 78-1 respective the second optical guiding element 78-2. The crossing area 82 of the deflected first light beam 77-1 and deflected second light beam 77-2 is arranged in the range of the tip of the tool insert 14. The first light beam 77-1 and the second light beam 77-2 can create a contrasting pattern in a plane substantially perpendicular to the axis of rotation 15 of the tool insert 14, wherein the contrasting pattern can indicate the center of the axis of rotation 15 of the tool insert 14. The contrasting pattern can support the operator and decrease the risk of a misalignment of the power tool.

In order to power the first light unit 76-1 and the second light unit 76-2, the dust removal device 70 includes a first power cord that connects the first light unit 76-1 to the electrical interface and a second power cord that connects the second light unit 76-2 to the electrical interface of the dust removal device. Alternatively, the dust removal device 70 may include a separate power source configured to power the first and second light unit 76-1, 76-2, such as a power source powering both the first and second light unit 76-1, 76-2 or a first power source powering the first light unit 76-1 and a second power source powering the second light unit 76-2.

For the dust removal device 70 including the first light unit 76-1 emitting the first light beam 77-1 and the second light unit 76-2 emitting the second light beam 77-2, the first and second light sources 76-1, 76-2 are preferably selected from the same type of light source; the first and second light sources 76-1, 76-2 will have the same wavelength or same range of wavelengths and the same power. The color of the light sources can be adapted to the objective of the light unit, such as illuminating the tip of the tool insert 14 and it's working area on the workpiece or transferring the center of the axis of rotation 15 of the tool insert 14 onto the workpiece.

For the dust removal device 70 including the first optical guiding element 78-1 configured to guide the first light beam 77-1 emitted towards the tip of the tool insert 14 and the second optical guiding element 78-2 configured to guide the second light beam 77-2 towards the tip of the tool insert 14, the first and second optical guiding elements 78-1, 78-2 are selected from the same type of optical guiding element; the optical guiding elements will have the same optical guiding and/or forming properties and will be adapted to the same wavelength or same range of wavelengths.

In the exemplary version of FIG. 5, the first optical guiding element 78-1 is formed as a first mirror and the second optical guiding elements 78-2 is formed as a second mirror. The first mirror 78-1 deflects the first light beam 77-1 via reflection and the second mirror 78-2 deflects the second light beam 77-1 via reflection towards the tip of the tool insert 14.

The concept of the dust removal device 70 according to the present invention can be used in combination with any type of power tool performing an operation by using a tool insert on a workpiece, wherein the tool insert generates dust during the operation.

## Claims

1. A dust removal device (40; 70) configured to be connected to a power tool (10) performing an operation by using a tool insert (14) on a workpiece (27), the dust removal device (40; 70) comprising:
▪ a device housing (41; 71),
▪ an extraction head (42; 72) configured to suck dust generated by the tool insert (14),
▪ a transfer part (43; 73) connected to the extraction head (42; 72) and movable along a longitudinal direction (44; 74) with respect to the device housing (41; 71),
▪ a dust container (45; 75) configured to collect dust and being connected to the transfer part (43; 73) and/or a port configured to connect the dust removal device (40; 70) to a vacuum cleaner, and
▪ a light unit (46; 76-1, 76-2) configured to emit a light beam (47; 77-1, 77-2),
**characterized in that** the dust removal device (40; 70) further includes an optical guiding element (48; 61; 78-1, 78-2) configured to guide the light beam (47; 77-1, 77-2) towards the tip of the tool insert (14).

2. The dust removal device according to claim 1, wherein the light unit (46) is arranged on the device housing (41) and the optical guiding element (48; 61) is connected to the extraction head (42).

3. The dust removal device according to any one of claims 1 to 2, wherein the light unit (46) is at least partially encased by a housing element (49) and the optical guiding element (48; 61) is mounted to an optic holder (54; 62).

4. The dust removal device according to claim 3, wherein the housing element (49) is integrated into the device housing (41) and/or the optic holder (54; 62) is fixedly connected to the extraction head (42).

5. The dust removal device according to claim 3, wherein the housing element is connected in a releasable manner to the device housing (41) and/or the optic holder is connected in a releasable manner to the extraction head (42).

6. The dust removal device according to any one of claims 1 to 5, wherein the light beam (47) propagates in a beam direction (50) that is parallel to an axis of rotation (15) of the tool insert (14) with a non-zero offset (Δ).

7. The dust removal device according to claim 1, wherein the light unit includes a first light unit (76-1) configured to emit a first light beam (77-1) and a second light unit (76-2) configured to emit a second light beam (77-2), and the optical guiding element includes a first optical guiding element (78-1) configured to guide the first light beam (77-1) towards the tip of the tool insert (14) and a second optical guiding element (78-2) configured to guide the second light beam (77-2) towards the tip of the tool insert (14).

8. The dust removal device according to claim 7, wherein the first light beam (77-1) propagates in a first beam direction (80-1) that is parallel to an axis of rotation (15) of the tool insert (14) with a first non-zero offset (Δ₁) and the second light beam (77-2) propagates in a second beam direction (80-2) that is parallel to the axis of rotation (15) of the tool insert (14) with a second non-zero offset (Δ₂).

9. The dust removal device according to any one of claims 7 to 8, wherein the first light beam (77-1) and the second light beam (77-2) cross each other after the first light beam (77-1) has passed the first optical guiding element (78-1) and the second light beam (77-2) has passed the second optical guiding element (78-2).

10. The dust removal device according to claim 9, wherein the first light beam (77-1) and the second light beam (77-2) create a contrasting pattern in a plane substantially perpendicular to the axis of rotation (15) of the tool insert (14), the contrasting pattern indicating the center of the axis of rotation (15) of the tool insert (14).

11. The dust removal device according to any one of claims 1 to 10, wherein the light unit (46; 76-1, 76-2) is selected from any of a white LED, a colored LED, and a laser light source.

12. The dust removal device according to any one of claims 1 to 11, wherein the optical guiding element (48; 78-1, 78-2) is selected from any one of a plane mirror, a convex mirror, a concave mirror, a prism, a group of prisms, a lens, a group of lenses, a light guide, or a grating.

13. The dust removal device according to any one of claims 1 to 12, further comprising a power cord (52) connecting the light unit (46) to an electrical interface (27) that is configured to be connected to the power tool (10), to a power source of the dust removal device, or to a power source of the light unit (46).

14. A power tool (10) configured to be connected to a dust removal device (40; 60) according to any one of claims 1 to 13.
